# FASCICULE DE BREVET EUROPEEN

(11) **EP 0 997 513 B1**
(45) Date de publication et mention de la délivrance du brevet: **10.03.2004**
(21) Numéro de dépôt: 99390022.4
(22) Date de dépôt: 28.10.1999
(51) Int. Cl.: C09J 189/00

(54) **Colle à l'eau à base d'extrait protéique végétal et procédé de préparation**
Wässriger Klebstoff auf Basis von pflanzlichen Protein-Extrakten und Verfahren zu deren Herstellung
Aqueous adhesive based on a vegetable protein extract and process for the preparation

(30) Priorité: 29.10.1998 FR 9813573
(43) Date de publication de la demande: 03.05.2000
(73) Titulaire: Toulousaine de Recherche et de Développement en abrégé "T.R.D.", 31190 Auterive (FR)
(72) Inventeur: Silvestre, Francoise, 31520 Ramonville Saint-Agne (FR); Rigal, Luc, 31240 Saint-Jean (FR); Leyris, Juliette, Appt. 101, Le Vieux Colombier, 31400 Toulouse (FR); Gaset, Antoine, 31000 Toulouse (FR)
(74) Mandataire: Cabinet BARRE LAFORGUE & associés

(56) Documents cités:
- DE-A- 4 026 435
- GB-A- 1 064 187
- US-A- 3 622 556
- US-A- 3 878 135
- MOHAMMED SAEED ET AL.: "Chlorogenic acid interactions with sunflower proteins." J. AGR. FOOD CHEM., vol. 37, no. 5, 1989, pages 1270-1274, XP002108585

## Description

L'invention concerne une colle à l'eau à base d'extrait protéique végétal. Elle s'étend à un procédé de préparation particulièrement économique de ladite colle.

Les protéines animales (collagène) sont connues depuis très longtemps pour posséder des propriétés adhésives. Certaines protéines végétales sont également utilisées pour préparer des produits collants depuis une époque plus récente. On pourra se reporter à l'ouvrage suivant qui, quoique relativement ancien, fait un point complet sur les propriétés adhésives des protéines : "SALSBERG, H.K., Protein adhesives, In. Encycl. Polym. Sci. Techno., 1969, p 678-688". La publication "DELAND MYERS, Past, Present and Potential Uses of Soy Proteins in Nonfood Industrial Applications, Proc. W. Conf. Oilseed Techn. and Util., 1993, p 278-285" vise plus particulièrement les protéines de soja. Le brevet DE-4.026.435 décrit des panneaux réalisés à partir de fibres de bois et de protéines animales ou végétales qui, après thermopressage, forment un liant entre les fibres.

Toutefois, ces protéines végétales possèdent en général des propriétés adhésives insuffisantes pour permettre de les utiliser seules. Elles sont jusqu'à présent utilisées avec ou sans traitement complémentaire, en formulation, combinées à d'autres composés adhésifs (protéines animales, composés de synthèse). Par exemple, le brevet US 3.329.518 décrit une formulation contenant des protéines de soja, du sang séché par atomisation et un amidon modifié (amidon dialdéhyde), en vue de constituer une colle de pressage à chaud ; des additifs (borax, silicate de sodium, antimousse) sont en outre ajoutés à la colle pour en améliorer les propriétés. De telles formulations sont coûteuses en raison, d'une part, des produits adhésifs qu'elles contiennent, d'autre part, des opérations nécessaires pour leur préparation (extraction et isolement des protéines végétales, du sang ou synthèse de composés, dosages, mélanges, ...). Par ailleurs, les publications de KALAPATHY et al. (JAOCS, Vol. 72, n° 5, p. 507-510 et n° 12, p. 1461-1464, 1995) décrivent, dans le cas des protéines de soja, un traitement chimique et/ou enzymatique qui permet d'en améliorer les propriétés adhésives.

De façon générale, les procédés décrivant l'extraction de protéines végétales ont été mis au point pour préparer des produits protéiques destinés à l'alimentation. Dans ces procédés, on cherche à obtenir des protéines pures, débarrassées des composés indésirables comme les polyphénols. A cet effet, dans le but d'extraire sélectivement les protéines et de ne pas entraîner les composés indésirables (qui restent dans le résidu végétal), ces procédés connus travaillent dans des conditions nécessairement douces de température/pH (pH < 10,5 ; température ambiante). Par exemples, les brevets FR-2.427.058 et FR-2.549.350 décrivent la préparation d'un produit protéique à partir de tournesol, qui permet d'obtenir une concentration en protéines de 95 % avec une concentration en polyphénols inférieure à 0,5 %, grâce à des conditions douces de température/pH et à un ajout d'additif (sel organique ou minéral) qui favorise l'extraction sélective des protéines. L'article "MOHAMMED SAEED ET AL. : "Chlorogenic acid interactions with sunflower proteins." J. AGR. FOOD CHEM., vol. 37, n°. 5, 1989, pages 1270-1274", étudie des conditions d'extraction sélective de protéines de tournesol, permettant de les débarrasser des polyphénols.

La présente invention se propose de fournir une colle à l'eau à base d'extrait protéique végétal qui bénéficie d'un pouvoir adhésif suffisant pour qu'il ne soit pas nécessaire de la formuler avec d'autres produits adhésifs tels que autres types de protéines ou composés synthétiques.

Un autre objectif de l'invention est de fournir un procédé particulièrement économique minimisant le nombre d'étapes pour fabriquer une telle colle à partir de résidus végétaux.

Un autre objectif de l'invention est de fournir un procédé conduisant à un rendement élevé de produit collant (supérieur à 50 % en poids de la matière sèche protéique initiale du résidu végétal).

A cet effet, la colle à l'eau conforme à l'invention comprend au moins 70 % en poids de protéines de tournesol associées à de l'acide chlorogénique et/ou acide caféique dans une proportion pondérale sensiblement comprise entre 3 % et 12 %. (Sauf indications contraires, toutes les proportions pondérales sont fournies en poids de matière sèche.)

Les expérimentations ont permis de mettre en évidence que l'association protéine/acides chlorogénique et/ou caféique dans la plage des proportions ci-dessus définies conduit à une colle à l'eau bénéficiant d'un excellent pouvoir adhésif qui permet d'utiliser les protéines végétales sans les formuler avec d'autres composés adhésifs. On réduit ainsi notablement le coût de la colle obtenue. Il est probable que ces performances proviennent d'une synergie entre le pouvoir réticulant des polyphénols précités et les propriétés adhésives propres des globulines.

Selon une composition préférée qui semble conduire aux meilleurs résultats, la colle comprend à la fois de l'acide chlorogénique et de l'acide caféique dans une proportion pondérale relative de 65 % à 75 % d'acide chlorogénique pour 35 % à 25 % d'acide caféique.

Une telle colle peut être préparée à partir d'une matière première végétale essentiellement constituée par un tourteau de tournesol contenant au plus 20 % d'huile. L'utilisation d'une telle matière brute naturelle, très abondante, qui est actuellement considérée comme un sous-produit de peu de valeur, permet d'obtenir la colle dans des conditions économiques considérablement plus avantageuses en comparaison aux colles à l'eau connues. Le procédé de préparation consiste, après déshuilage au moins partiel du tourteau pour ramener sa teneur en huile au-dessous du seuil précité, à mettre celui-ci en contact avec une solution alcaline de pH sensiblement compris entre 11 et 13,5 à une température sensiblement comprise entre 30° C et 80° C pour solubiliser les protéines ainsi que les acide chlorogénique et acide caféique, à séparer la phase liquide du résidu solide, à ajouter un acide à ladite phase liquide pour ramener son pH à une valeur sensiblement comprise entre 4,5 et 5,5 en vue de précipiter les flocs mixtes protéines/acides chlorogénique et caféique, et à séparer le précipité obtenu pour constituer la colle.

Le tourteau de tournesol déshuilé ou partiellement déshuilé contient une forte concentration en protéines et une teneur relative appropriée en acide chlorogénique et acide caféique, qui permettent d'obtenir, directement à l'issue du procédé ci-dessus défini, la colle à l'eau visée par l'invention, sans avoir à isoler des composants ou à en ajouter. Dans le procédé sus-visé, on s'est attaché à éviter la séparation des acides chlorogénique et caféique par rapport aux protéines en vue de les extraire simultanément (alors que cette séparation est recherchée dans les procédés classiques d'extraction alcaline de protéines). Il semble, en outre, que les propriétés adhésives obtenues en conservant, associés aux protéines du tournesol, l'acide chlorogénique et l'acide caféique originellement présents dans cette plante soit meilleure que si l'on opère un mélange de composés de même nature préalablement isolés ; la coextraction des protéines et des acide chlorogénique et acide caféique du tournesol conserve les interactions actives entre ces composés, accentuant les propriétés adhésives.

La composition suivante de colle peut être obtenue par mise en oeuvre du procédé ci-dessus visé et donne d'excellents résultats en pratique :
- entre 87 % et 95 % de protéines de tournesol,
- entre 3 % et 4,5 % d'acide chlorogénique,
- entre 1 % et 2 % d'acide caféique,
- moins de 6 % de composés minéraux.

Les composés minéraux peuvent en particulier comprendre un sel de calcium en proportion pondérale inférieure à 4 %. Ce composé améliore la rhéologie de la colle et permet de lui conférer une viscosité facilitant son application.

Le procédé de préparation précédemment défini peut être mis en oeuvre en "batch" dans un réacteur agité discontinu. Toutefois, une mise en oeuvre continue de l'alcalinisation peut être opérée dans des conditions économiques avantageuses dans un dispositif bi-vis comprenant deux vis copénétrantes tournant à l'intérieur d'une enceinte tubulaire en vue de soumettre la matière première végétale à un traitement chimique combiné à un traitement mécanique, la phase liquide étant séparée du résidu solide par soutirage à travers un filtre. La phase liquide soutirée peut ensuite être soumise au traitement acide (notamment en "batch") suivi de la séparation du précipité.

En pratique, pour faciliter les stockages et transports, le précipité obtenu subira un séchage en vue de fournir une base sèche de colle, destinée à être additionnée à de l'eau lors de l'utilisation. Le cas échéant, le sel de calcium est ajouté sous forme de poudre après ce séchage.

Le procédé de préparation et les caractéristiques de la colle obtenue sont illustrés dans les exemples qui suivent, mis en oeuvre soit en "batch" (exemple 1), soit dans un dispositif bi-vis tel que schématisé au dessin annexé (exemple 2) ; sur ce dessin :

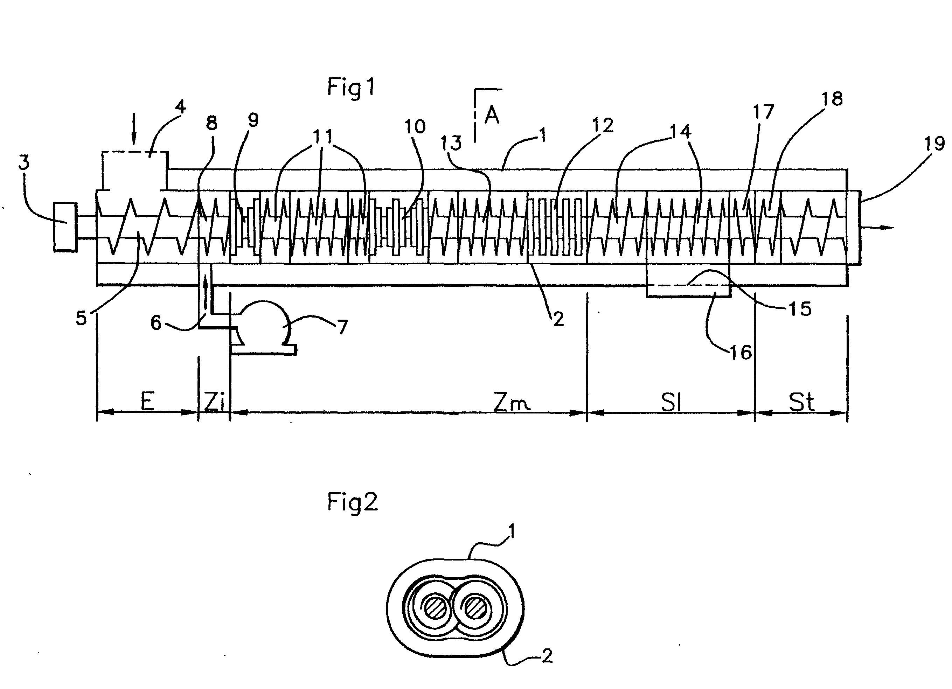

- la figure 1 est une représentation longitudinale symbolique dudit dispositif bi-vis,
- la figure 2 en est une coupe transversale par un plan A.

Le dispositif a été réalisé à partir de modules commercialisés par la Société "CLEXTRAL" (marque déposée) sous la référence générale "BC45". Chaque module comprend une enceinte tubulaire à double paroi 1 et 2 qui permet une régulation thermique du coeur de l'enceinte où sont logés les organes actifs. Le traitement d'alcalinisation est mis en oeuvre dans l'exemple 1 à une température du milieu réactif ajustée à 30° C. Certains modules sont du type comprenant deux vis identiques copénétrantes, à pas direct ou à pas inversé, d'autres du type comprenant des malaxeurs de cisaillement composés de disques bilobes, d'autres du type comprenant des malaxeurs d'écrasement composés de disques monolobes. Les divers modules sont entraînés en rotation en synchronisme par un moteur électrique 3 permettant d'obtenir une vitesse de rotation de son arbre de sortie pouvant atteindre 600 tr/min. Dans les exemples, la vitesse de rotation choisie est de 300 tr/min.

Le dispositif comprend essentiellement les zones fonctionnelles suivantes (d'amont en aval) :
- une entrée de tourteau E, comprenant une trémie 4 d'alimentation en tourteau et un module de bi-vis à pas direct 5,
- une zone d'injection Zᵢ d'une solution alcaline, comprenant un conduit 6 doté d'une pompe 7 d'injection de la solution, et un module de bi-vis à pas direct 8,
- une zone de mélange Zₘ combinant des malaxeurs 9, 10, 12, et des modules de bi-vis à pas direct tels que 11 et 13, de pas décroissant de l'amont vers l'aval,
- une zone de soutirage de la phase liquide S_{ℓ}, combinant des modules de bi-vis à pas direct de pas décroissant tels que 14, un filtre 15, une sortie de liquide 16, et un module bi-vis à pas inversé 17, (contrefilets ajourés) réalisant une compression axiale en aval du filtre 17,
- et une zone terminale de recueil des matières solides Sₜ, comprenant des modules de bi-vis à pas direct tels que 18 et une sortie 19 de résidu végétal.

### EXEMPLE 1 : PREPARATION EN EXTRACTEUR AGITE DISCONTINU

### Composition de la matière première utilisée :

Dans cet exemple, on utilise du tourteau de tournesol épuisé en huile, issu de la trituration de graines de tournesol ; l'extraction d'huile a été réalisée par pressage et une extraction à l'hexane. Après extraction, la composition du tourteau est la suivante :

| % Taux d'hydratation | % Minéraux | % Protéines | % Lipides | % Cellulose | % Lignine | % Hémi-celluloses | % Composés phénoliques |
|---|---|---|---|---|---|---|---|
| 10 | 7 | 35,6 | 1 | 22,3 | 5,2 | 18,5 | 5,7 |

Les composés phénoliques sont essentiellement constitués par de l'acide chlorogénique (4%) et d'acide caféique (1,7%).

### Procédé de fabrication de la base de colle :

Le tourteau est préalablement homogénéisé par passage dans un broyeur à marteau de type "ELECTRA" (marque déposée) équipé d'une grille à mailles rondes de 5 mm.

1 kg de tourteau de tournesol homogénéisé, contenant 90 % de matière sèche, est introduit dans un réacteur agité discontinu de 25 litres en présence de 20 litres de solution basique (NaOH) à pH = 12. Le tout est chauffé à 50 °C et agité pendant 20 min. On sépare alors la phase liquide du résidu solide par centrifugation puis on précipite les flocs protéiques par ajout d'H₂SO₄ jusqu'à obtenir un pH de la solution égal à 5.

On sépare alors la phase liquide de l'extrait protéique par centrifugation puis ce dernier est séché à l'étuve ventilée à 50 °C. Le rendement global de l'extraction est de 61 % (par rapport au potentiel protéique du tourteau).

### Caractérisation de la colle à l'eau :

La base sèche de colle obtenue présente la composition suivante : 90,3% de protéines (essentiellement de type globuline), 3,6% d'acide chlorogénique, 1,6% d'acide caféique et 2,4% de sels minéraux (essentiellement sodium et soufre).

La colle à l'eau est ensuite obtenue par mélange, sous agitation mécanique, de 16 g de base sèche et 100 mℓ d'eau déminéralisé (1,6 g de soude étant ajouté pour favoriser la dissolution dans l'eau). Cette solution a un caractère rhéofluidifiant, et mesurée sous un gradient de 50 s⁻¹, sa viscosité est de 491.10⁻³Pa.s.

### Performance de la colle :

Les collages sont réalisés par recouvrement simple sur des éprouvettes standardisées en contre-plaqué. La résistance au cisaillement des joints collés est déterminée par la sollicitation en traction jusqu'à la rupture d'un joint à recouvrement simple entre deux éprouvettes. On exerce sur celles-ci un effort de traction longitudinal, parallèle à la surface de l'assemblage et à l'axe principal de l'éprouvette (Norme NF T 76.107). Chaque collage est répété 10 fois. Les propriétés collantes ont été comparées à celles du soja (travaux de KALAPATHY et al., 1995).

| Base collante | Protéines de soja solubilisées en milieu aqueux basique, pH 8-12 | Colle selon l'invention |
|---|---|---|
| Encollage | - Plaquettes d'érable : 2 mg de -protéines/cm² sur 4 cm² | Plaquettes de contre-plaqué : 1,45 mg de base collante/cm² sur 5 cm² |
| | - Mise sous pression (5 kg) pendant 2 heures | - Mise sous pression (5 kg) pendant 15 min |
| | - 8 heures de séchage-conditions ambiantes | -8 heures de séchage-conditions ambiantes |
| Test de traction | INSTRON 1011 - 20 mm/min | INSTRON 1026-5 mm/min |
| Force à la rupture | 300 à 800 N | 1 584 N en moyenne (σn - 1 = 252 N) |

Dans le cas de la colle conforme à l'invention, la force à la rupture est très largement supérieure à celle obtenue, dans des conditions équivalentes, avec un extrait de protéines de soja préparée conformément à la publication sus-évoquée.

### EXEMPLE 2 : PREPARATION EN REACTEUR BI-VIS

### Composition de la matière première utilisée :

La composition de la matière première utilisée est identique à celle décrite dans l'exemple précédent.

### Procédé de fabrication de la base de colle :

Le tourteau non homogénéisé est introduit à un débit de 15,6 kg matière sèche/heure dans la zone d'entrée E, et convoyé, avec une vitesse de rotation de 300 tr/min, vers la zone d'injection Zᵢ où la solution alcaline est injectée à un débit de 96,8 kg/h. Le traitement d'alcalinisation est mis en oeuvre à une température de 30 °C. Les malaxeurs bilobes de la zone de mélange Zₘ assurent la mise en contact intime de la solution alcaline et du tourteau. Cet effet de mélange est complété par les malaxeurs monolobes. Les contre-filets dans le dernier module assurent la formation d'un bouchon dynamique de la matière et la compression axiale de cette dernière permettant ainsi l'expression de la solution extractante, récupérée au niveau de la zone de soutirage S_{ℓ} et traitée comme dans l'exemple 1 (précipitation des flocs protéiques par ajout d'H₂SO₄ jusqu'à pH = 5, séparation par centrifugation et séchage de l'extrait à l'étuve à 50°C).

### Obtention et performance de la colle :

La composition de la base de colle obtenue est identique à celle obtenue à l'exemple 1.

La colle à l'eau est réalisée à partir de cette base comme précédemment et ses performances sont identiques à celles décrites dans l'exemple 1.

## Revendications

1. Colle à l'eau à base d'extrait protéique végétal, **caractérisée en ce qu'**elle comprend au moins 70 % en poids de protéines de tournesol associées à de l'acide chlorogénique et/ou acide caféique dans une proportion pondérale sensiblement comprise entre 3 % et 12 %.

2. Colle selon la revendication 1, **caractérisée en ce qu'**elle comprend à la fois de l'acide chlorogénique et de l'acide caféique dans une proportion pondérale relative de 65 % à 75 % d'acide chlorogénique pour 35 % à 25 % d'acide caféique.

3. Colle selon l'une des revendications 1 ou 2, contenant un sel de calcium en proportion pondérale inférieure à 4 %.

4. Colle selon l'une des revendications 1, 2, 3, **caractérisée en ce qu'**elle possède la composition pondérale suivante :
- entre 87 % et 95 % de protéines de tournesol,
- entre 3 % et 4,5 % d'acide chlorogénique,
- entre 1 % et 2 % d'acide caféique,
- moins de 6 % de composés minéraux.

5. Procédé de préparation d'une colle à l'eau, **caractérisé en ce qu'**on utilise une matière première végétale essentiellement constituée de tourteau de tournesol contenant au plus 20 % d'huile, on met ledit tourteau en contact avec une solution alcaline de pH sensiblement compris entre 11 et 13,5 à une température sensiblement comprise entre 30 °C et 80 °C pour solubiliser les protéines ainsi que les acide chlorogénique et acide caféique, on sépare la phase liquide du résidu solide, on ajoute un acide à ladite phase liquide pour ramener son pH à une valeur sensiblement comprise entre 4,5 et 5,5 en vue de précipiter les flocs mixtes protéines/acides chlorogénique et caféique, et on sépare le précipité obtenu pour constituer la colle.

6. Procédé de préparation selon la revendication 5, **caractérisé en ce que** le tourteau de tournesol au moins partiellement déshuilé est mis en contact avec la solution alcaline dans un dispositif bi-vis comprenant deux vis copénétrantes tournant à l'intérieur d'une enceinte tubulaire en vue de soumettre la matière première végétale à un traitement chimique combiné à un traitement mécanique, la phase liquide étant séparée du résidu solide par soutirage à travers un filtre.

7. Procédé de préparation selon l'une des revendications 5 ou 6, dans lequel le précipité obtenu est soumis à une opération de séchage en vue de fournir une base sèche de colle, destinée à être additionnée à de l'eau lors de l'utilisation.

8. Procédé de préparation selon la revendication 7, dans lequel on ajoute, après séchage, un sel de calcium sous forme de poudre en proportion pondérale inférieure à 4 %.

## Claims

1. Aqueous adhesive based on a vegetable proteinic extract, **characterised in that** it comprises at least 70 % by weight of sunflower proteins associated with chlorogenic acid and/or caffeic acid in a weight proportion substantially between 3 % and 12 %.

2. Adhesive according to claim 1, **characterised in that** it comprises both chlorogenic acid and caffeic acid in a relative weight proportion of 65 % to 75 % chlorogenic acid for 35 % to 25 % caffeic acid.

3. Adhesive according to either of claims 1 or 2, containing a calcium salt in a weight proportion below 4 %.

4. Adhesive according to one of claims 1, 2, 3, **characterised in that** it possesses the following composition by weight :
- between 87 % and 95 % of sunflower proteins,
- between 3 % and 4.5 % chlorogenic acid,
- between 1 % and 2 % caffeic acid,
- less than 6 % of inorganic compounds.

5. Method for preparing an aqueous adhesive, **characterised in that** a vegetable starting material is used substantially consisting of sunflower cake containing at most 20 % oil, the said cake is put into contact with an alkaline solution with a pH substantially between 11 and 13.5 at a temperature substantially between 30°C and 80°C so as to solubilise the proteins as well as the chlorogenic acid and caffeic acid, the liquid phase is separated from the solid residue, an acid is added to the said liquid phase so as to bring its pH to a value substantially between 4.5 and 5.5 with a view to precipitating mixed protein/chlorogenic and caffeic acid flocs, and the precipitate obtained is separated so as to constitute the adhesive.

6. Preparative method according to claim 5, **characterised in that** the sunflower cake which is at least partially deoiled is put into contact with the alkaline solution in a twin-screw device comprising two intermeshing screws revolving inside a tubular chamber with a view to subjecting the vegetable starting material to a chemical treatment combined with a mechanical treatment, the liquid phase being separated from the solid residue by drawing it off through a filter.

7. Preparative method according to either of claims 5 or 6, wherein the precipitate obtained is subjected to a drying operation with a view to providing a dry adhesive base, intended to be added to water at the time of use.

8. Preparative method according to claim 7, wherein a calcium salt in the form of a powder is added, after drying, in a weight proportion below 4 %.

## Patentansprüche

1. Wässriger Klebstoff auf der Basis eines pflanzlichen Proteinextrakts, **dadurch gekennzeichnet, dass** er wenigstens 70 Gew.-% Sonnenblumenproteine in Verbindung mit Chlorogensäure und/oder Kaffeinsäure in einem Gewichtsanteil im Wesentlichen zwischen 3 und 12 % umfasst.

2. Klebstoff nach Anspruch 1, **dadurch gekennzeichnet, dass** er gleichzeitig Chlorogensäure und Kaffeinsäure in einem relativen Gewichtsanteil von 65 bis 75 % Chlorogensäure auf 35 bis 25 % Kaffeinsäure umfasst.

3. Klebstoff nach Anspruch 1 oder 2, der ein Calciumsalz in einem Gewichtsanteil von weniger als 4 % enthält.

4. Klebstoff nach Anspruch 1, 2 oder 3, **dadurch gekennzeichnet, dass** er die folgende Gewichtszusammensetzung besitzt:
- zwischen 87 und 95 % Sonnenblumenproteine,
- zwischen 3 und 4,5 % Chlorogensäure,
- zwischen 1 und 2 % Kaffeinsäure,
- wenigstens 6 % Mineralbestandteile.

5. Verfahren zur Herstellung eines wässrigen Klebstoffs, **dadurch gekennzeichnet, dass** eine primäre pflanzliche Masse verwendet wird, die im Wesentlichen aus Sonnenblumenkuchen mit einem Ölgehalt von mehr als 20 % besteht, der genannte Kuchen mit einer alkalischen Lösung mit einem pH-Wert im Wesentlichen zwischen 11 und 13,5 bei einer Temperatur im Wesentlichen zwischen 30 und 80°C in Kontakt gebracht wird, um die Proteine sowie die Chlorogensäure und die Kaffeinsäure zu solubilisieren, die Flüssigphase vom Feststoffrest abgeschieden wird, der genannten Flüssigphase eine Säure zugegeben wird, um ihren pH-Wert auf einen Wert im Wesentlichen zwischen 4,5 und 5,5 zu bringen, um die gemischten Flocken von Protein/Chlorogen- und Kaffeinsäure auszufällen, und das erhaltene Präzipitat zur Bildung des Klebstoffs abgeschieden wird.

6. Herstellungsverfahren nach Anspruch 5, **dadurch gekennzeichnet, dass** der wenigstens teilweise entölte Sonnenblumenkuchen mit der alkalischen Lösung in einer Doppelschneckenvorrichtung in Kontakt gebracht wird, die zwei im Innern eines röhrenförmigen Gehäuses ineinander greifende rotierende Schnecken umfasst, um die primäre pflanzliche Masse einer chemischen Behandlung in Kombination mit einer mechanischen Behandlung zu unterziehen, wobei die Flüssigphase vom Feststoffrest durch Ausfiltern abgeschieden wird.

7. Verfahren nach Anspruch 5 oder 6, bei dem das erhaltene Präzipitat einem Trocknungsvorgang unterzogen wird, um eine trockene Klebstoffbasis zu bilden, die beim Gebrauch zu Wasser gegeben wird.

8. Verfahren nach Anspruch 7, bei dem nach dem Trocknen ein pulverförmiges Calciumsalz in einem Gewichtsanteil von weniger als 4 % zugegeben wird.
